(19) Europäisches Patentamt
European Patent Office
Office européen des brevets

(11) Publication number: **0 382 440 A1**

(12) **EUROPEAN PATENT APPLICATION**

(21) Application number: 90301161.7

(51) Int. Cl.[5]: **C08J 5/22, B01D 61/44**

(22) Date of filing: 05.02.90

(30) Priority: 08.02.89 GB 8902761

(43) Date of publication of application: 16.08.90 Bulletin 90/33

(84) Designated Contracting States: AT BE CH DE DK ES FR GB GR IT LI LU NL SE

(71) Applicant: **IMPERIAL CHEMICAL INDUSTRIES PLC**
Imperial Chemical House, Millbank
London SW1P 3JF(GB)

(72) Inventor: Scott, Graham Wilfred
Rosedale, Jack Lane, Moulton
Northwich, Cheshire CW9 8QA(GB)
Inventor: Taylor, Thomas Mark Cavell
29 Heathfields Close
Chester, CH2 2AT(GB)
Inventor: Gough, Paul
23 Duncan Avenue
Runcorn, WA7 5DY(GB)

(74) Representative: Thomas, Ieuan et al
Imperial Chemical Industries PLC, Legal Department: Patents, PO Box 6, Bessemer Road
Welwyn Garden City, Herts, AL7 1HD(GB)

# (54) Cation exchange membranes.

(57) Cation exchange membranes which are derived from aryl ether polymers wherein at least a portion of the aromatic rings are bound into the polymer backbone by two ether linkages and which bear a sulphonic acid derivative are more chemically stable than conventional cation exchange membranes and may be used in electrodialysis systems.

Fig. 1

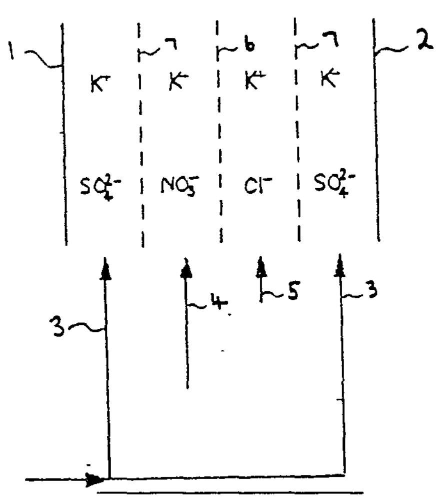


EP 0 382 440 A1

# CATION EXCHANGE MEMBRANES

The present invention relates to cation exchange membranes and to electrodialysis systems and processes using such membranes.

Electrodialysis is used to separate electrolytes from an aqueous medium, typically water.Typically, the aim is the removal of an electrolyte from a solvent to purify the solvent, e.g. desalination of brackish water, industrial effluent or foodstuffs. However, it is also used where the aim is concentration and purification of the electrolyte, e.g. sodium chloride from brine.

Conventional membranes used in electrodialysis tend to be cross-linked products, e.g. derived from polystyrene, which tend to suffer certain disadvantages, e.g. poor heat stability. Recently in EP 0,153,713 it has been suggested that certain thermoplastic polymers in which an ionic group is bonded to the polymer backbone via an alkylene chain of at least 4 carbon atoms (and introduced via a Friedel-Crafts reaction) may be used in electrodialysis systems. It has been suggested therein that such thermoplastic membranes are laminated to a fibre fabric to give acceptable tensile strength thereto. However, such thermoplastic membranes suffer from certain disadvantages, eg high water up-take and multi-stage chemical synthesis.

We have now devised membranes useful in electrodialysis which overcome many of the aforementioned disadvantages. Furthermore, they have the surprising advantages compared with the above conventional cross-linked membranes that they are more stable to acids, alkalis and oxidising agents, eg dichromate and chlorine.

According to a first aspect of the present invention there is provided a cation exchange membrane comprising an arylether polymer as hereinafter defined at least a portion of which aryl rings bear a sulphonic acid derivative $-S0_3M$ wherein M is $H^+$ or a metal ion.

Where X is a metal ion it is preferably a mono-valent ion, e.g. $Na^+$; we do not exclude the possibility that it may be a multi-valent ion, e.g. $Cu^{2+}$, but this is not preferred.

The cation exchange membrane according to the first aspect of the present invention, in combination with an appropriate anion exchange membrane, is useful in electrodialysis, ie as one component of a cell pair useful in electrodialysis or so-called electrodialysis reversal. Electrodialysis systems and processes are more fully described in R.M. Ahlgren in Proceedings of Ion Exchange for Pollution Control, 1979, Vol,? at pp 145-57 published by CRG, Boca Raton, Florida, USA. The disclosure in which reference is incorporated herein by way of reference.

By "cation exchange membrane" we mean a membrane which comprises a thin film of polymer bearing negative charges, typically derived from sulphonic or carboxylic acid groups, and which selectively transports cations therethrough in preference to anions, as the result of the passage of an electric current.

The polymer of which the cation exchange membrane is comprised has a backbone which substantially comprises in-chain aromatic rings. Whereas we do not exclude the possibility that there may be a direct link between certain adjacent aromatic rings, e.g. biphenyl, preferably adjacent rings are linked by one or more atoms (which may be hetero-atoms), more preferably by one atom having one or more atoms dependent therefrom.

By arylether polymer we mean a polymer having aromatic rings linked to both neighbouring rings in its chain through -0- wherein said neighbouring rings are part of repeating units Ph-X-Ph where Ph is paraphenylene and X is $S0_2$ and/or C0 and/or a direct link. At least a plurality of the aromatic rings is bonded in the polymer chain by two ether linkages. It will be appreciated that the groups bonding the aromatic rings into the polymer backbone are chemically stable, e.g. not hydrolysable, under the conditions at which the membrane is to be used, e.g $-S0_2-$ or -CO-.

Polymer which are useful for forming cation exchange membranes of the present invention are more fully described in the following patent specifications. The disclosures in which are incorporated herein by way of reference.

Our EP-A-0,008,894 describes a hydrophilic sulphonated polymer derived by controllably sulphonating a polymer having repeat units of General Formula

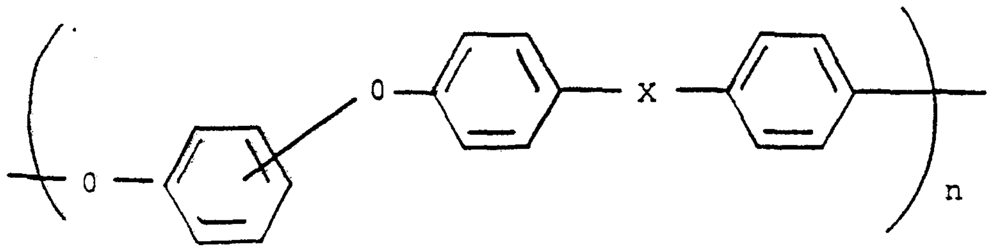

II

wherein X is $SO_2$ and General Formula

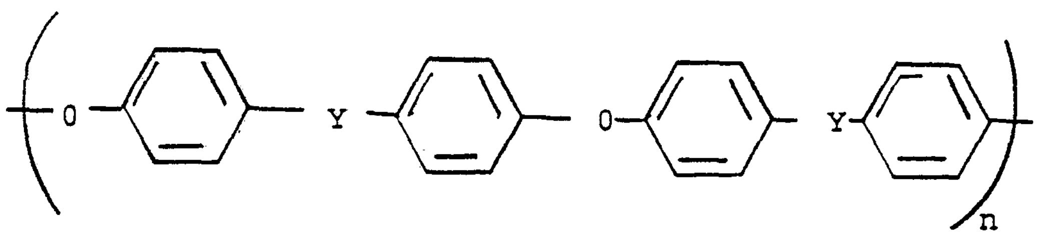

III

wherein Y is $SO_2$,
and wherein substantially all units II being sulphonated and substantially all units III unsulphonated.

Our EP-A-0,008,895 and EP-A-0,041,780 describe further arylether polymers having repeat units of the General Formule II and III wherein X is C0 and wherein both X and Y are C0, repsectively.

In each of such polymers in our aforementioned European Patent Specifications, the aromatic rings in sub-units

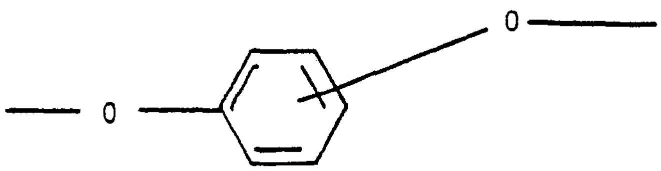

IV

normally undergo monosulphonation if the ether linkages are mutually ortho or para, and disulphonation if the ether linkages are mutually meta. A range of sulphonated polymers having differing sulphonate contents can be made by choosing the relative proportions of units of General Formulae II and III in the polymer subjected to sulphonation. When X is C0, sulphonation takes place more slowly than when X is $SO_2$ and can be conveniently controlled in conventional ways, such as by time and temperature.

The polyarylether (of which the membrane of the present invention is comprised) carrying the substituent groups contains units II, and the aforementioned sub-units IV therein can carry one or two substituent according to the mutual disposition of the ether linkages. The polyarylether may contain units III. Linkages X in different repeating units of General Formula II may be the same or different in $SO_2$ or CO.

The molar proportion of units II is suitably in the range 1 to 100%, and preferably 30 to 80%. Conveniently the balance of the polymer is units III as hereinbefore defined: and linkages Y can be all $S0_2$ or all C0 or partly $-S0_2-$ and partly -C0-. Where III is present, the percentage thereof in the polymer backbone can be readily determined by the skilled man using $^{13}C$ NMR spectroscopy. Whereas we do not exclude the possibility that the polyarylether may contain units other than II and III, preferably II and III provide the major portion, more preferably at least 90% and more particularly preferably all the units of the polyaryl ether.

The weight average molecular weight of the polyarylethersulphonic acid can be, for example, from about 5000 up to the viscosity too high to permit ready handling, ie conversion into membrane. For the above-mentioned sulphonated polyarylether-sulphones and ketones it is typically in the range to 5000 to 10000, especially 25000 to 60000. These molecular weights correspond to reduced viscosities (RV) (1g polymer per 100 $cm^3$ of solution) in the range 0.5 to 4.0, especially 1.0 to 2.5. The molecular weight can be expressed alternatively as a polymerisation number, typically over 5 and in the range range 12 to 250, especially 60-150. The ion-exchange capacity of the sulphonated polyarylether can be in the range 0.2 to 5,

equivalents per kilogram.

The sulphonated polyarylether is soluble in organic liquids, particularly polar aprotic solvents such as, DMSO and DMF and mixtures thereof and can be fabricated into membranes by solvent casting therefrom.

According to a second aspect of the present invention there is provided an electrodialysis system comprising a plurality of cation exchange membranes alternating with, opposed to, and in working relationship with a plurality of anion exchange membranes as hereinafter defined, arranged in cell pairs and provided with means to charge a weak solution to and discharge a concentrated solution from alternating pairs characterised in that the cation exchange membrane is a cation exchange membrane as defined in the first aspect, of the present invention.

An anion exchange membrane comprises a thin film of a polymer bearing positive charges, typically as quaternary ammonium groups, which selectively pass anions in preference to cations as the result of passage of an electric current.

In an electrodialysis system according to the second aspect of the present invention, whereas we do not exclude the possibility that the anion exchange membrane is a conventional one, it is often preferred that it is derived from a polyarylether polymer similar to that used for the cation exchange membrane.

Preferably the cation exchange membrane of the first aspect of the present invention is self-supporting but we do not exclude the possibility that it may be supported on a suitable support, e.g. laminated onto or impregnated with a suitable material.

Typically the membrane of the first aspect of the present invention is in the form of a dense continuous film of thickness between 10 and 1000µm.

According to a third aspect of the present invention there is provided a method for electrodialysis wherein the system used therein is the system defined in the second aspect of the present invention.

The cation exchange membrane of the first aspect of the present invention is typically prepared by casting it from a solution of the appropriate polymer in a suitable solvent, e.g. DMF, at about 20-50% concentration and then evaporating the solvent such that a film is left. We do not exclude the possibility that fibre reinforcement may be incorporated during the casting step although this is not essential. The skilled man will appreciate that the membrane can be prepared by alternative methods, e.g. melt casting.

We do not exclude the possibility that the cation exchange membrane of the first aspect of the present invention may be incorporated into a so-called "bipolar membrane" by conventional techniques, e.g. lamination, co-extrusion or coating.

The present invent is further illustrated by reference to the drawing appended hereto which shows, by way of example only, an arrangement of membranes and feed systems suitable for permselectivity experiments.

Figure 1 is a schematic representation of such a system. In Figure 1, a permselectivity system is provided with an anode (1), a cathode (2), means for charging an electrode rinse stream (3), means for charging a concentrating stream (4) and means for charging a diluting stream (5). In the system a cation exchange membrane (6), prepared as described hereinafter in Examples 1 and 2, is disposed between two commercially available cation exchange membranes (7) (Neosepta CL 25T). The operating conditions, eg applied voltage, pressure and flux, may be readily determined by the skilled man.

The invention is further illustrated by the following Examples which illustrate, by way of example only, certain aspects of the present invention.

Examples 1 and 2

These Examples illustrate the preparation and certain properties of certain sulphonated polyarylethersulphone copolymers.

The copolymers were prepared by the method disclosed in our EP 0,008,894. In Examples 1 and 2, the copolymers contained units II and III in molar ratios 57:43 and 33:67 respectively; in both copolymers the sub-units IV were para-linked and each ring of sub-unit IV carried one sulphonic acid group.

In both Examples, a 30 wt% solution of the appropriate polymer in N,N-dimethylformamide was filtered through a 30 micron filter and centrifuged for 30 minutes at 2000rpm. A bead of the solution was poured onto a clean dry glass plate and spread to a thickness of 250 microns using a knife blade. The film was covered and allowed to dry in ambient conditions. The dried films had an average thickness of 45 and 43 microns for Examples 1 and 2 respectively.

The electrical resistance of each of the above membranes was measured in 0.5M sodium chloride solution at 25°C using a Wayne Kerr Autobalance Bridge (Model B642). A cell comprising two graphite electrodes separated by the test membrane (effective area 9.62 $cm^2$) was used. The membrane resistance

was taken to be the difference in the resistance of the cell with and without the test membrane in place. The specific resistance of the membrane was calculated by dividing the membrane's areal resistance by its thickness. The values obtained for both membranes are recorded in Table 1.

The water content of each of the membranes was measured on films after equilibrating in 0.5M sodium chloride solution by Karl Fischer titration of small samples (ca 10mg) using a Mettler DL18 Autotitrator. The values obtained for both membranes are recorded in Table 1.

The current efficiency of each of the membranes was measured using a laboratory scale electrodialysis cell having a membrane area of $70cm^2$ and having the configuration of cation exchange membranes and feeds as shown in Figure 1. A constant current of $15mA\ cm^{-2}$ was passed between the electrodes of the cell and the transport of chloride ions from solutions of potassium chloride with concentrations varying from 0.01 to 1.0M was followed by titration on a Mettler DL40RC autotitrator. The current efficiency for the anion for each membrane was obtained from the gradient of a plot of moles of anion transported against the total charge passed. The cation current efficiency of each of the membranes was calculated as the difference between the anion current efficiency and 100%. The result of the above tests are shown in Table 1

TABLE 1

| Property | Example 1 | Example 2 |
|---|---|---|
| Membrane Thickness (cm) | 0.0045 | 0.0043 |
| Areal Resistance (ohm $cm^{-2}$) | 1.5 | 33.8 |
| Specific Resistance (ohm cm) | 333 | 7860 |
| Water content (%) | 17 | 12 |
| Current Efficiency (%) | | |
| K+ (0.01M KCL) | 99 | >99 |
| K+ (0.1M KCL) | 98 | >99 |
| K+ (1.0M KCL) | 96 | 99 |
| Calculated Ion Exchange Capacity (equivalents/kg) | 1.33 | 0.75 |

The stability of each of the membranes towards 1N HCl, 1N NaOH, 0.02% $C1_2$, 1% potassium dichromate and 25% NaOH solutions were determined by measuring the specific electrical resistance of the membrane after exposure to each reagent for extensive periods of time at ambient temperatures. The results are shown in Table 2.

From Table 2 it can be seen that (i) there is a correlation between specific resistance and Ion Exchange Capacity and (ii) the membranes are essentially unaffected by exposure to 1N HCl, 1N NaOH, 0.02% $Cl_2$, 1% potassium dictromate and 25% NaOH.

TABLE 2

| Reagent | Example 1 | | Example 2 | |
|---|---|---|---|---|
| | Exposure (days) | Specific Resistance (ohm. cm) | Exposure (days) | Specific Resistance (ohm. cm) |
| 1N HCl | 0 | 421 | 0 | 13958 |
| | 15 | 470 | 15 | 16708 |
| | 331 | 461 | 331 | 19876 |
| 1N NaOH | 0 | 421 | 0 | 13958 |
| | 30 | 371 | 30 | 16720 |
| | 331 | 406 | 331 | 15239 |
| 0.02% $C1_2$ | 0 | 421 | 0 | 13958 |
| | 15 | 375 | 15 | 16050 |
| | 331 | 370 | 331 | 14536 |
| 1.0% $K_2Cr_2O_7$ | 0 | 401 | 0 | 14036 |
| | 7 | 314 | 7 | 14116 |
| | 91 | 369 | 91 | 19604 |
| 25% NaOH | 0 | 409 | 0 | 15114 |
| | 7 | 315 | 7 | 14509 |
| | 91 | 363 | 91 | 26707 |

## Claims

1. A cation exchange membrane comprising an aryl ether polymer at least a portion of which aryl rings bear a sulphonic acid derivative $-SO_3M$ wherein M is $H^+$ or a metal ion
wherein at least a plurality of aromatic rings are linked to both neighbouring rings in the polymer chain through -O-;
wherein said neighbouring rings are part of repeating units Ph-X-Ph wherein Ph is paraphenylene and X which in different repeating units Ph-X-Ph may be the same or different is $So_2$ or CO or a direct link.

2. A cation exchange membrane as claimed in Claim 1 wherein the aryl ether polymer comprises repeating units

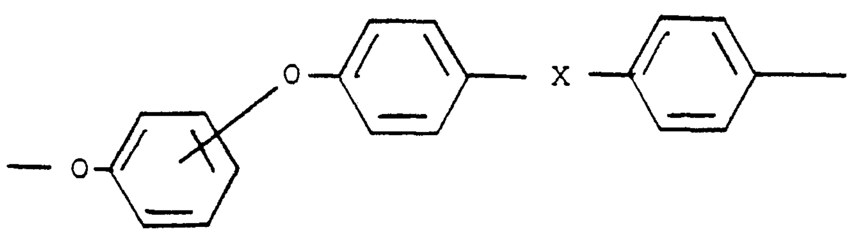

II

wherein X is $SO_2$ or CO and repeating units

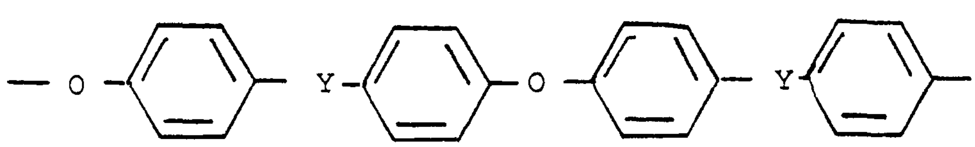

III

wherein Y is $SO_2$ or CO
and wherein substantially all the residues

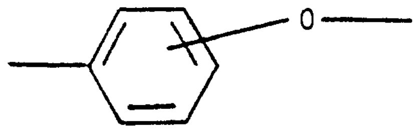

bear a sulphonic acid derivative as defined in Claim 1.

3. A cation exchange membrane as claimed in Claim 2 wherein the repeating units II and III provide the major proportion of the repeating units in the polymer chain.

4. A cation exchange membrane as claimed in Claim 3 wherein repeating units II provide between 30% and 80% of the repeating units in the polymer chain.

5. A cation exchange membrane as claimed in Claim 1 which is self-supporting.

6. An electrodialysis system comprising a plurality of cation exchange membranes alternating with, opposed to and in working relationship with a plurality of anion exchange membranes, means to charge a weak solution to and means to discharge a concentrated solution from, alternating pairs of membranes characterised in that the cation exchange membrane is a cation exchange membrane as claimed in Claim 1.

7. An electrodialysis system as claimed in Claim 6 wherein the anion exchange membrane is derived from the same polymer backbone as the cation exchange membrane.

8. A method for electrodialysis wherein a system as claimed in Claim 6 is used.

9.. A method for the preparation of a cation-exchange membrane as claimed in Claim 1 comprising the step of casting a polymer.

Fig. 1

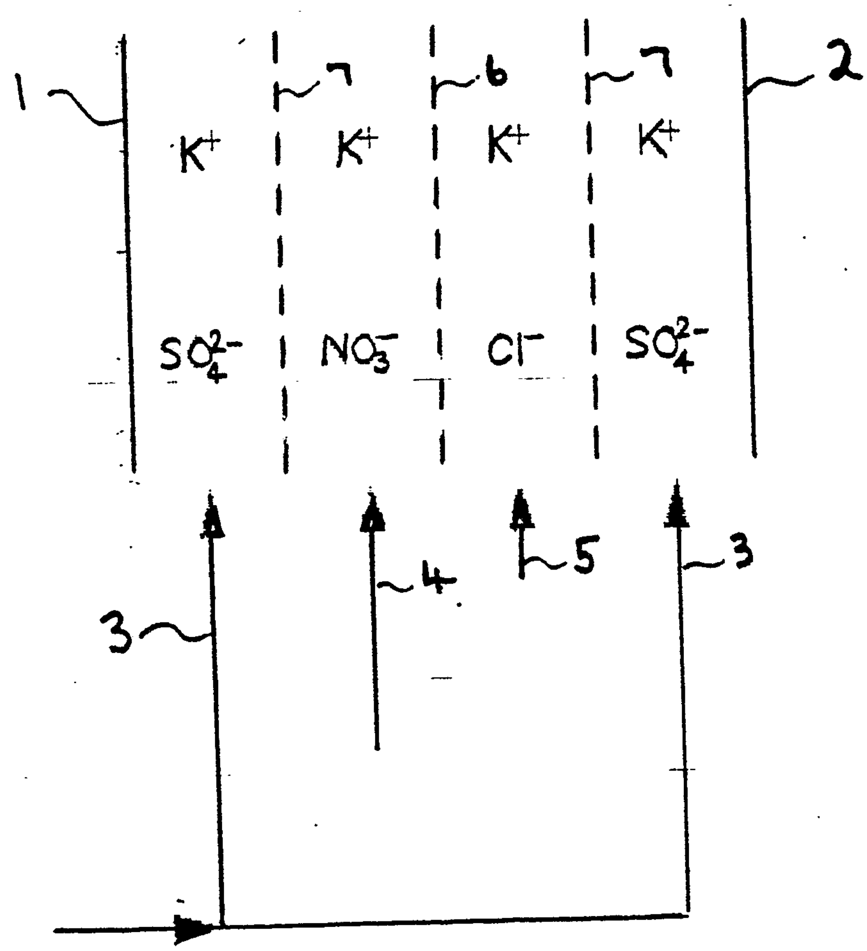

European Patent Office

# EUROPEAN SEARCH REPORT

Application Number

EP 90 30 1161

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 731 411 (J.T. CLARKE)<br>* Column 2, lines 20-37; column 9, claims 1,2 *<br>--- | 1 | C 08 J 5/22<br>B 01 D 61/44 |
| A,D | EP-A-0 041 780 (IMPERIAL CHEMICAL INDUSTRIES LTD)<br>* Page 2, line 7 - page 3, line 22 *<br>--- | 1-3 | |
| A,D | EP-A-0 008 895 (IMPERIAL CHEMICAL INDUSTRIES LTD)<br>* Page 2, line 27 - page 3, line 14 *<br>----- | 1-4,9 | |
| | | | TECHNICAL FIELDS SEARCHED (Int. Cl.5) |
| | | | B 01 D<br>C 08 J |

The present search report has been drawn up for all claims

| Place of search | Date of completion of the search | Examiner |
|---|---|---|
| THE HAGUE | 17-04-1990 | GONZALEZ ARIAS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)